# EUROPEAN PATENT APPLICATION

(11) **EP 3 761 253 A1**
(43) Date of publication of application: **06.01.2021**
(21) Application number: 18908222.5
(22) Date of filing: 05.12.2018
(51) Int. Cl.: G06Q 40/00

(54) **METHOD AND DEVICE FOR RECOGNIZING SUSPICIOUS MONEY LAUNDERING GROUP**

(30) Priority: 28.02.2018 CN 201810164789
(71) Applicant: ALIBABA GROUP HOLDING LIMITED, George Town, Grand Cayman (KY)
(72) Inventor: GUO, Ya, Hangzhou, Zhejiang 311121 (CN)
(74) Representative: Bryn-Jacobsen, Caelia
(86) International application number: PCT/CN2018/119323
(87) International publication number: WO 2019/165817

(57) **Abstract**

The present specification has provided an identification method of suspicious money-laundering groups, comprising: establishing , based on financial transaction records that meet predetermined statistical conditions, financial transaction relationships between financial accounts in the records; clustering the financial accounts by adopting a clustering algorithm according to the established financial transaction relationships, and generating cluster characteristics for each cluster; labeling clusters that meet a blacklist condition as a money-laundering clusters, labeling clusters that meet a whitelist condition as normal clusters, and the cluster characteristics of the money-laundering clusters and the normal clusters are used as sample data to train a binary classification model; inputting the cluster characteristics of clusters other than the money-laundering clusters and the normal clusters into the trained binary classification model, and determining whether the other clusters are suspicious money-laundering groups according to an output of the binary classification model.

## Description

### TECHNICAL FIELD

The present specification relates to the technical field of data processing and in particular to an identification method and identification device of suspicious money-laundering groups.

### BACKGROUND

With the development of information technology, internet technology has gradually advanced into financial sectors, creating a new business model - internet finance. Internet finance has broadened channels of financial services, optimized allocation of funds, reduced transaction costs, simplified transaction processes, which can make up for drawbacks of traditional finances to meet users' diverse needs.

However, the inherent characteristics of the internet, such as anonymity, speediness and convenience, can also provide an enabling condition for the implementation of various illegal acts, one of which is money-laundering. In recent years, money-laundering exhibits a trend transitioning from traditional payment tools to internet finance and money-laundering carried out by criminals using internet payment tools has become rampant. In this context, how to quickly and effectively prevent risks of money-laundering has become a problem urgently needing to be addressed for the development of internet banking industry.

### SUMMARY

In light of this, the present specification has provided an identification method of suspicious money-laundering groups, comprising:
establishing, based on financial transaction records that meet predetermined statistical conditions, financial transaction relationships between financial accounts in the records;
clustering the financial accounts by adopting a clustering algorithm according to the established financial transaction relationships, and generating cluster characteristics for each cluster;
labeling a cluster that meets a blacklist condition as a money-laundering cluster, labeling a cluster that meets a whitelist condition as a normal cluster, and using the cluster characteristics of the money-laundering cluster and the normal cluster as sample data, to train a binary classification model; and
inputting the cluster characteristics of clusters other than the money-laundering cluster and the normal cluster into the trained binary classification model, and determining whether the other clusters are suspicious money-laundering groups according to an output of the binary classification model.

The present specification has further provided an identification device of suspicious money-laundering groups, comprising:
a financial transaction relationship unit, for establishing, based on financial transaction records that meet predetermined statistical conditions, financial transaction relationships between financial accounts in the records;
a cluster characteristics generating unit, for clustering the financial accounts by adopting a clustering algorithm according to the established financial transaction relationships, and generating cluster characteristics for each cluster;
a binary classification model training unit, for labeling a cluster that meets a blacklist condition as a money-laundering cluster, labeling a cluster that meets a whitelist condition as a normal cluster, and using the cluster characteristics of the money-laundering cluster and the normal cluster as sample data, to train a binary classification model;
a suspicious group determining unit, for inputting cluster characteristics of clusters other than the money-laundering cluster and the normal cluster into the trained binary classification model, and determining whether the other clusters are suspicious money-laundering groups according to an output of the binary classification model.

The present specification has provided a computer apparatus, comprising: a memory and a processor; the memory having a computer program stored thereon which may be run by the processor and when the processor runs the computer program, the steps of performing the identification method of the suspicious money-laundering groups are executed.

The present specification has provided a computer-readable storage medium having computer programs stored thereon, when the computer program is executed by a processor, the steps of performing the identification method of the suspicious money-laundering groups are executed.

It is clear from the above technical solution, in an embodiment of the present specification, accounts are clustered into a plurality of clusters by adopting financial transaction relationships between the accounts; the clusters that respectively meet a blacklist condition and a whitelist condition are labeled as a money-laundering cluster and normal cluster, with cluster characteristics of the money-laundering cluster and the normal cluster as sample data to train a binary classification model and the trained binary classification model is utilized to identify whether the other clusters are suspicious money-laundering groups; an embodiment of the present specification can adopt recent financial transaction records, and quickly and accurately identify suspicious money-laundering groups with high risks based on relevance between accounts discovered from the financial transaction relationships.

### BRIEF DESCRIPTION OF THE DRAWINGS

FIG. 1 is a flowchart of an identification method of suspicious money-laundering groups in an embodiment of the present specification;
FIG. 2 is a schematic diagram of a process for identifying suspicious money-laundering groups in an application example of the present specification;
FIG. 3 is a diagram of a hardware structure of an apparatus executing an embodiment of the present specification;
FIG. 4 is a logical structural diagram of a device for identifying suspicious money-laundering groups in an embodiment of the present specification.

### DETAILED DESCRIPTION OF THE EMBODIMENTS

An embodiment of the present specification has provided a novel identification method for suspicious money-laundering groups, which uses financial transaction relationships between accounts to cluster the accounts and extract cluster characteristics of each cluster, uses the cluster characteristics of known money-laundering clusters and normal clusters as simple data to train a binary classification model using the cluster characteristics as input, then use the binary classification model completed through training to identify suspicious money-laundering groups in the other unknown clusters, thus accomplishing the identification of high risk and suspicious money-laundering groups based on account relationships. This is more efficient when compared with individual suspicious money-laundering account identification based on users' behaviors; further, as the model training and identification adopt recent financial transaction records, the identification of the money-laundering accounts can be quicker and more accurate.

An embodiment of the present specification may be operated on any apparatus with computing and storage capabilities such as mobile phones, tablet computers, PCs (Personal Computer), notebooks, server and so on; and the various functions in the embodiment of the present specification may also be implemented by logical nodes operated on two or more apparatuses.

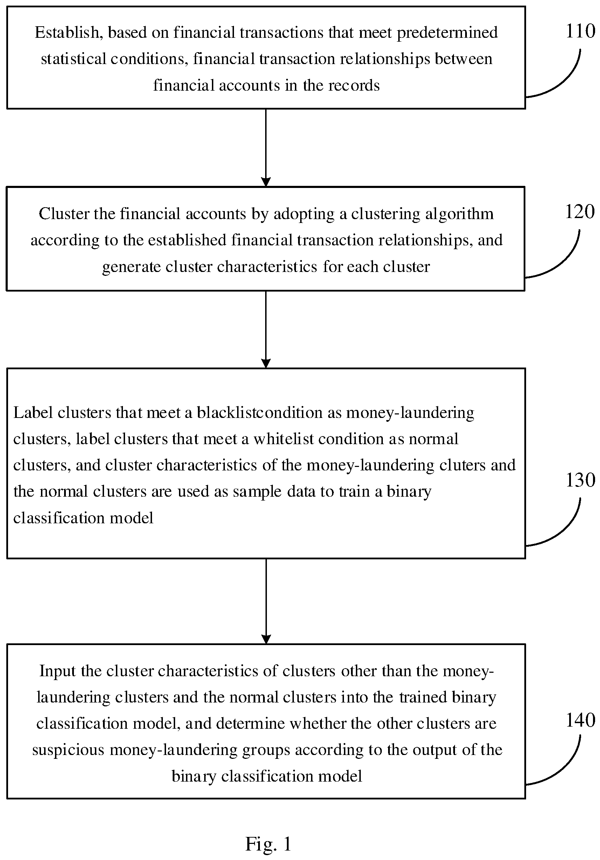

In an embodiment of the present specification, a flowchart of an identification method of suspicious money-laundering groups is shown as in FIG. 1.

Step 110, establishing, based on financial transaction records that meet predetermined statistical conditions, financial transaction relationships between financial accounts in the records.

In an embodiment of the present specification, a system of an internet financial service provider employs a user's online behaviors associated with flow of funds carried out with the user's financial account as a data basis for identifying suspicious money-laundering groups. The financial account may be any account that the user can use to accomplish fund inflow or outflow, e.g., accounts, debit cards, credit cards and passbooks registered on various payment platforms.

When the user utilizes a financial account to carry out various operations, for each operation that causes any fund inflow or outflow, the system of the internet financial service provider will store such as a financial transaction record. Each financial transaction record includes information such as a fund inflow account, a fund outflow account, and an amount of fund flow, etc.

During the system operation process of an internet financial service provider, financial transaction records will continuously be generated. A part or the full financial transaction records may be selected to identify suspicious money-laundering groups, by adopting predetermined statistical conditions. Predetermined statistical conditions may be determined according to service characteristics of the internet financial service provider and the accuracy for such identification and timeliness requirement in a practical application scenario. In one example, financial transaction records with respect to a certain item or certain items of specific services (e.g., fund transfer, depositing and cash withdrawal behaviors) within a predetermined time period (e.g., two months) may be used as data for identifying the suspicious money-laundering groups; and in another example, financial transaction records that exceed a certain threshold within a predetermined time period may be used as data for identifying the suspicious money-laundering groups.

Based on financial transaction records, financial transaction relationships between various financial amounts may be established, and can be used to cluster various internet financial accounts in records.

Depending on service characteristics of practical application scenarios, accuracy requirements for the identification of the suspicious money-laundering groups, the clustering algorithm employed and so on, the specific methods for constructing the financial transaction relationships are determined, which will not be specified by the embodiment of the present specification. Examples are provided below for description.

First example: establishing a financial transaction relationship between two financial accounts in each record within financial transaction records that meet predetermined statistical conditions, i.e., between a fund inflow account and a fund outflow account. That is, there is a financial transaction relationship between financial accounts within previous financial transactions in the above noted records.

Second example: establishing a financial transaction relationship between two financial accounts in each record in financial transaction records that meet predetermined statistical conditions; accumulating a total amount of financial transactions between any two financial accounts ever involved in financial transactions in the above records; and when the total amount of financial transactions between certain two financial accounts is lower than a predetermined value, deleting the financial transaction relationship between the two financial accounts. The undeleted financial transaction relationships will be used to cluster the financial accounts in the records by adopting a clustering algorithm. In this example the focus is placed on financial accounts with large volume of fund flows; thus, the number of financial transaction relationships can be reduced and the execution speed of the clustering algorithm can be accelerated, so that the clustering results can be more accurate.

Third example: for certain clustering algorithms, fund flow directions in financial transaction relationships will have an impact on the clustering results. In this case, the financial transaction relationships between two financial accounts A and B comprises: a one-way financial relationship from A to B (i.e., the funds flow from financial account A to financial account B), a one-way financial relationship from B to A, and a two-way financial relationship (i.e., the funds flow from financial account A to financial account B and also from financial account B to financial account A). An established financial transaction relationships (e.g., the result of the first example or the second example) may be labeled as a one-way or two-way financial relationship according to a financial flow volume between the two financial accounts.

Fourth example: when labeling a one-way or two-way financial relationship in the third example, the one-way total transaction amount of the two transaction directions between two financial accounts having a financial transaction relationship are respectively accumulated and when the one-way total transaction amount of the two transaction directions between two financial accounts meets a predetermined difference condition, the financial transaction relationship between the two financial accounts is labeled as a one-way financial relationship; otherwise, the financial transaction relationship is a two-way financial relationship between the two financial accounts. The predetermined difference condition can be set based on requirements of practical application scenarios, e.g., it may be that the absolute value of the difference between the one-way total flow volumes of the two flow directions reaches or exceeds a certain first preset value, or the ratio of the larger one-way total flow to the smaller one-way total flow reaches or exceeds a certain second preset value.

Step 120, clustering financial accounts by adopting a clustering algorithm according to the established financial transaction relationships, and generating cluster characteristics for each cluster.

A correlation between financial accounts may be described by the established financial transaction relationships and based on such correlation between the financial accounts, these financial accounts may be clustered into a number of clusters by adopting a clustering algorithm, and each cluster comprises a plurality of financial accounts. The financial accounts may be clustered by adopting any unsupervised clustering algorithms, which will not be specified by the embodiment of the present specification, e.g., K-Means, DBSCAN (Density-Based Spatial Clustering of Applications with Noise, Label Propagation Algorithm (PLA), and so on.

For each cluster, cluster characteristics of each cluster may be generated by adopting any characteristics extraction algorithms, e.g., Principal Component Analysis (PCA), Network Motifs and so on, and similarly these will not be specified by the embodiment of the present specification.

In one implementation method, clustering and characteristics extraction are performed using a network graph constructed from the financial transaction relationships. In particular, a financial relationship network graph is established, with the financial accounts in the financial transaction records that meet the predetermined statistical conditions as nodes and with the established financial transaction relationships as edges; the financial accounts in the financial relationship network graph are clustered by adopting a clustering algorithm, according to the financial network relationship graph; a cluster sub-graph of each cluster is established, with the financial accounts belonging to each cluster as nodes and with the financial transaction relationships between the financial accounts belonging to the cluster as edges; generating characteristic vector of each cluster sub-graph, as the cluster characteristics of each cluster, for each cluster sub-graph by applying the characteristics extraction algorithm, wherein the financial network relationship graph may be a directional graph (i.e., a financial network relationship graph constructed by a one-way financial relationship and two-way financial relationship) and may also be a non-directional (a financial network relationship graph constructed by financial relationships with no distinction of funds flow direction).

Step 130, labeling a cluster that meets a blacklist condition as a money-laundering cluster, labeling a cluster that meets a whitelist condition a as a normal cluster, and the cluster characteristics of the money-laundering cluster and the normal cluster are used as sample data, to train a binary classification model.

In an embodiment of the present specification, a binary classification model is constructed using the cluster characteristics as inputs, and the output of the binary classification model is the possibility of financial accounts belonging to that cluster being a suspicious money-laundering group. The binary classification model may adopt any binary classification machine learning algorithm, which is not specified herein.

For various clusters obtained after clustering, based on known money-laundering accounts (confirmed financial accounts which had money-laundering behaviors or often have money-laundering behaviors) and normal accounts (i.e., confirmed accounts that never had money-laundering behaviors), certain clusters that meet a blacklist condition can be determined as money-laundering clusters, while the other clusters that meet a whitelist condition can be determined as normal clusters, wherein financial accounts in a money-laundering cluster are considered to be a money-laundering group, while financial accounts belonging to a normal cluster are considered to be normal accounts.

The blacklist condition and whitelist condition can be set based on service characteristics according to practical application scenarios. Using the blacklist condition as an example, known money-laundering accounts in a cluster exceeding a certain first value can be used as a blacklist condition; the ratio of known money-laundering accounts in a cluster exceeding a certain second value can be used as a blacklist condition; further, the ratio of known money-laundering accounts in a cluster exceeding a certain third value and meanwhile, the ratio of known normal accounts in the cluster being lower than a certain fourth value can be used as a blacklist condition.

The cluster characteristics labeled as money-laundering clusters and normal clusters are used as sample data, to train a binary classification model.

Step 140, inputting cluster characteristics of clusters other than a money-laundering clusters and normal clusters into the trained binary classification model, and determining whether the other clusters are suspicious money-laundering groups according to the output of the binary classification model.

Following the completion of the training of the binary classification model, the binary classification model may be used to determine whether clusters other than the money-laundering clusters and normal clusters (referred to as unknown clusters) are suspicious money-laundering groups. In particular, cluster characteristics of an unknown cluster are entered into a completely trained binary classification model, when the output of the binary classification model meets a established suspect condition (e.g., exceeding or being lower than a certain value), it is considered that such an unknown cluster is a suspicious money-laundering group, i.e., financial accounts in that cluster are highly likely to be used for money-laundering.

In addition, for each cluster obtained after clustering, an abnormality detection algorithm may be adopted to search for abnormal clusters in all clusters; and in case clusters with obvious abnormalities are identified, these identified abnormal clusters may be used for the identification of risky network characteristics. The identification of risky network characteristics can be implemented automatically by adopting algorithms, or performed manually by experts. The specific abnormality detection algorithm is not specified, for example, an iForest (Isolation Forest) algorithm may be adopted.

It is thus clear that, in an embodiment of the present specification, accounts are clustered by adopting the financial transaction relationships between accounts and the cluster characteristics are extracted for each cluster; the clusters that respectively meet the blacklist condition and the whitelist condition are labeled as money-laundering clusters and normal clusters; cluster characteristics of the money-laundering clusters and the normal clusters are used as sample data to train a binary classification model using the cluster characteristics as inputs; and the completely trained binary classification model is utilized to identify whether other clusters are suspicious money-laundering groups; so as to accomplish identification of high risk suspicious money-laundering groups by utilizing the recent financial transaction records and based on the financial accounts correlation relationships, which is quicker, more accurate and highly efficient.

The foregoing has described specific embodiments of the present application. Other embodiments fall within the scope of the appended claims. In some cases, the actions or steps recited in the claims may be performed in a sequence different from the order in the embodiments and may still achieve the desired result. Further, the processes depicted in the drawings do not necessarily require the particular order or sequential order shown to achieve the desired result. In certain embodiments, multitasking and parallel processing are or may be advantageous.

In one application example of the present specification, a third-party payment platform need to prevent money-laundering offenses committed by users through fund transfer, depositing, and cash withdrawal. The third-party payment platform stores financial transaction records of each user when conducting transfer, depositing, and cash withdrawal, i.e., how much fund have flown in or out from which financial account (including accounts registered on the third-party payment platform, accounts, bank cards, credit cards and so on registered on other other internet payment tools) to which financial account.

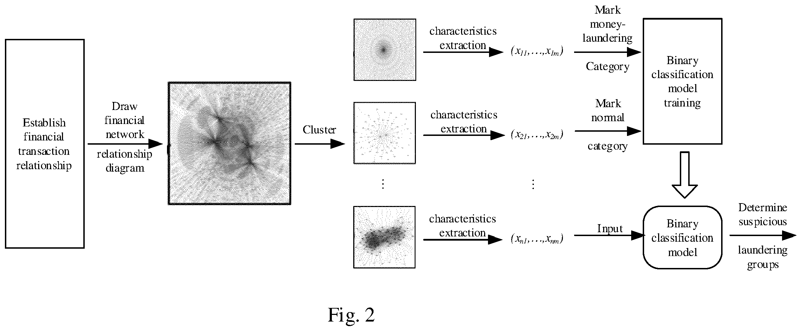

The process for the third-party payment platform utilizing the financial transaction records to identity suspicious money-laundering groups is illustrated in FIG. 2.

The third-party payment platform extracts the financial transaction records of fund transfers, depositing and cash withdrawal transactions of all accounts registered on this platform in the most recent one month to establish financial transaction relationships between the financial accounts. For two financial accounts with financial transactions within the above noted time period (set as financial account A and financial account B), collecting statistics including: a one-way total amount of inflow funds from financial account A to financial account B, a one-way total amount of inflow funds from financial account B to financial account A, and the total amount of funds transacted between financial account A and financial account B (i.e., a sum of the one-way total volumes in two transaction directions). When the total transaction amount of funds is less than 2000 Yuan RMB, it is considered that there is no financial transaction relationship between financial account A and financial account B. When the total amount of transaction reaches 2000 Yuan RMB, if the ratio of the one-way total volume of funds flowing from financial account A to financial account B to the one-way total volume of funds flowing from financial account B to financial account A reaches or exceeds 5, then such financial transaction relationship is considered to be a one-way financial relationship of funds flowing from financial account A to financial account B; while if the ratio of the one-way total volume of funds flowing from financial account B to financial account A to the one-way total volume of funds flowing from financial account A to financial account B reaches or exceeds 5, then such financial transaction relationship is considered to be a one-way financial relationship of funds flowing from financial account B to financial account A; otherwise, the financial transaction relationship is considered to be a two-way financial relationship.

After the one-way or two-way financial transaction relationship between the financial accounts is established, with the financial accounts as nodes and the financial transaction relationships as edges, a financial network relationship graph is drawn. An unsupervised clustering algorithm LPAis run on the financial network relationship graph and financial accounts involved in all the financial transaction records are divided into a plurality of clusters, with each cluster labeled with a GroupID and each financial account corresponding to a GroupID.

For each cluster, a cluster sub-graph is drawn, with all the financial accounts corresponding to such cluster GroupID as nodes and the financial transaction relationships between the financial accounts corresponding to such cluster GroupID as edges. With respect to each cluster sub-graph, a Network Motifs method is employed to extract characteristics, and after such extraction, each cluster sub-graph has a characteristic vector, as the cluster characteristic of such cluster.

The third-party payment platform has maintained a plurality of financial accounts that have already been determined as money-laundering accounts and a plurality of financial accounts that have already been determined as normal accounts. For each cluster, the number of money-laundering accounts and normal accounts in all financial accounts corresponding to such cluster GroupID are identified; if the proportion of money-laundering accounts is more than half of all the financial accounts of such cluster and the proportion of normal accounts is less than one tenth of all financial accounts of such cluster, then such cluster is labeled as a money-laundering cluster; and if the proportion of the money-laundering accounts is less than one tenth of all financial accounts of such cluster and the proportion of the normal accounts is more than half of all the financial accounts of such cluster, then such cluster is labeled as a normal cluster; otherwise, such cluster is labeled as an unknown cluster.

Characteristic vectors of the normal clusters and money-laundering clusters are used as sample data to train a neural network binary classification model. Inputs of the binary classification model are characteristic vectors and the output is the possibility of a cluster being a money-laundering cluster.

Following the completion of the training of the binary classification model, the characteristic vector of an unknown cluster is inputted into such binary classification model, and if the output of such binary classification model exceeds a certain predetermined threshold, then such cluster is determined as a suspicious money-laundering group.

In addition, an abnormality detection algorithm Isolation Forest is applied to characteristic vectors for all clusters, to identify clusters with obvious abnormalities and the clusters with obvious abnormalities are provided to experts, to assist the experts to study in such clusters characteristics of financial accounts, characteristics of funds flowing between financial accounts, behavioral characteristics of financial accounts and so on, so as to carry out new risky network characteristics identifications.

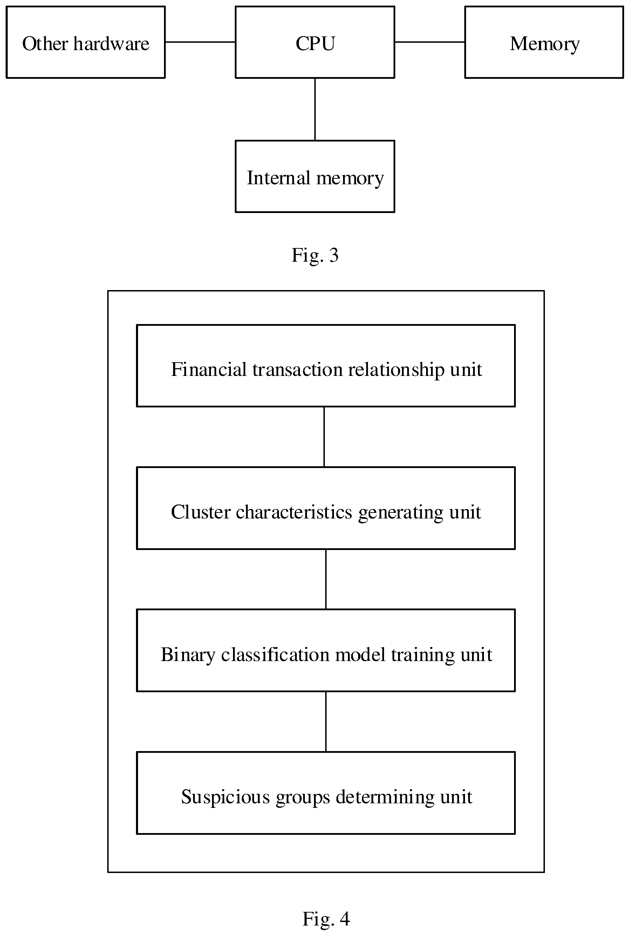

Corresponding to the above noted workflow implementation, an embodiment of the present specification has further provided an identification device for suspicious money-laundering groups. The device can be implemented by software, or through hardware, or a combination of software and hardware. Taking software implementation as an example, as a device in a logical sense, such device is formed through an operation of reading corresponding computer program instructions into a memory through a CPU (Central Process Unit) of the apparatus. From the perspective of hardware, in addition to the CPU, memory and storage device as illustrated in FIG. 3, the apparatus in which the suspicious money-laundering group identification device is located typically further comprises other hardware such as chips for wireless signal reception and transmission and/or other hardware for accomplishing network communication functions.

As illustrated in FIG. 4, an embodiment of the present specification has provided an identification device of suspicious money-laundering groups, comprising: a financial transaction relationship unit, a cluster characteristics generating unit, a binary classification model training unit and a suspicious group determining unit, wherein the financial transaction relationship unit is used for establishing, based on financial transactions that meet predetermined statistical conditions, financial transaction relationships between financial accounts in the records; the cluster characteristics generating unit is used for clustering financial accounts by adopting a clustering algorithm according to the established financial transaction relationships and generating cluster characteristics for each cluster; the binary classification model training unit is used for labeling a cluster that meets a blacklist condition as a money-laundering cluster, labeling a cluster that meets a whitelist condition as a normal cluster, and using the cluster characteristics of the money-laundering clusters and the normal clusters as sample data, to train a binary classification model; and the suspicious group determining unit is used for inputting cluster characteristics of clusters other than the money-laundering clusters and the normal clusters into the trained binary classification model and determining whether the other clusters are suspicious money-laundering groups according to an output of the binary classification model.

Optionally, the device further comprises abnormal cluster discovery unit for searching for abnormal clusters in all clusters by adopting an abnormality detection algorithm, to carry out identification of risky network characteristics.

In one example, the cluster characteristics generating unit is specifically used for: establishing a financial relationship network graph with the financial accounts in financial transaction records that meet predetermined statistical conditions as nodes and with established financial transaction relationships as edges; clustering the financial accounts in the financial relationship network by adopting a clustering algorithm; establishing a cluster sub-graph of each cluster, with the financial account belonging to the cluster as nodes and with the financial transaction relationships between the financial accounts belonging to the cluster as edges; and generating characteristic vectors of each cluster sub-graph, as the cluster characteristics of each cluster.

In the above example, the characteristics extraction algorithm comprises: a Network Motifs method; the clustering algorithm comprises: a label propagation algorithm (LPA) or a K-means algorithm.

Optionally, the financial transaction relationship unit is specifically used for: establishing financial transaction relationships between two financial accounts in each record within financial transaction records that meet predetermined statistical conditions; accumulating a total amount of financial transactions between any two financial accounts having financial transition records and when the total amount of financial transactions between certain two financial accounts is lower than a predetermined threshold, deleting the financial transaction relationship between the two financial accounts.

In one implementation method, the financial transaction relationship comprises: a one-way financial relationship and a two-way financial relationship between two financial accounts.

In the above implementation method, the financial transaction relationship unit is also used for: respectively accumulating a one-way total transaction amount of the two transaction directions between any two financial accounts having a financial transaction relationship, and when the one-way total transaction amounts of the two transaction directions between two financial accounts meet the predetermined difference condition, the financial transaction relationship is considered to be a one-way financial relationship between the two financial accounts; otherwise, the financial transaction relationship is considered to be a two-way financial relationship between the two financial accounts.

Optionally, the predetermined statistical conditions comprise: fund transfer, deposit and cash withdrawal between financial accounts over a predetermined time period.

An embodiment of the present specification has provided a computer apparatus that comprises a memory and a processor, wherein the memory stores a computer program that is executable by a processor; when the processor executes the stored computer program, various steps of the identification method of the suspicious money-laundering groups in an embodiment of the present specification are executed. For a detailed description of the steps of the identification method of suspicious money-laundering groups, the aforementioned contents may be referred to, which is not repeated herein.

An embodiment of the present specification has provided a computer-readable storage medium having computer programs stored thereon and when the computer program is executed by a processor, the steps of performing the identification method of suspicious money-laundering groups in the embodiments of the present specification are executed. For a detailed description of the steps of the identification method of suspicious money-laundering groups, the aforementioned contents may be referred to, which is not repeated herein.

The above only describes preferable embodiments of the present specification, which are not intended to limit the present application. Any modifications, equivalent substitutions, improvements, and the like made within the spirit and principles of the present application shall fall within the protection scope of the present application.

In a typical configuration, the computing apparatus includes one or a plurality of processors (CPUs), input/output interfaces, network interfaces and memories.

The memory may include a computer-readable medium in the form of a non-permanent memory, a random-access memory (RAM) and/or a non-volatile memory or the like, such as a read-only memory (ROM) or a flash memory (flash RAM). The memory is an example of a computer-readable medium.

The computer-readable medium includes permanent and non-permanent, movable and non-movable media that can achieve information storage by means of any methods or techniques. The information may be computer-readable instructions, data structures, modules of programs or other data. Examples of a storage medium of a computer include, but are not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage apparatuses, or any other non-transmission medium and can be used to store information accessible by a computing device. According to the definitions herein, the computer-readable medium does not include transitory computer-readable media (transitory media), such as a modulated data signal and a carrier wave.

It is also important to note that the terms "including", "comprising" or any other variant thereof are intended to cover non-exclusive inclusion. Processes, methods, goods or apparatuses, and a series of elements included therein include not only those elements but also other elements not explicitly listed, or also include elements inherent to such processes, methods, goods or equipment. In the absence of more restrictions, the element defined by the statement "including one ..." does not exclude other identical elements in the process, method, commodity or apparatuses that includes the element.

Those skilled in the art should appreciate that the embodiments of the present specification may be provided as a method, a system, or a computer program product. Therefore, the embodiments of the present specification may take the form of hardware only implementations, software only implementations, or implementations with a combination of software and hardware. Moreover, the embodiments of the present specification may take the form of a computer program product which is embodied on one or more computer-usable storage media (including, but not limited to, a magnetic disk storage, a CD-ROM, an optical storage and so forth) having computer-usable program code included therein.

## Claims

1. An identification method of suspicious money-laundering groups, comprising:
Establishing, based on financial transaction records that meet predetermined statistical conditions, financial transaction relationships between financial accounts in the records;
clustering the financial accounts by adopting a clustering algorithm according to the established financial transaction relationships, and generating cluster characteristics for each cluster;
labeling clusters that meet a blacklist condition as money-laundering clusters, labeling clusters that meet a whitelist condition as normal clusters, and using cluster characteristics of the money-laundering clusters and the normal clusters as sample data to train a binary classification model; and
inputting the cluster characteristics of clusters other than the money-laundering clusters and the normal clusters into the trained binary classification model, and determining whether the other clusters are suspicious money-laundering groups according to an output of the binary classification model.

2. The method according to Claim 1, further comprising searching for abnormal clusters in all clusters by adopting an abnormality detection algorithm, to carry out discovery of risky network characteristics.

3. The method according to Claim 1, wherein clustering the financial accounts by adopting a clustering algorithm according to the established financial transaction relationships and generating cluster characteristics for each cluster comprises:
establishing a financial relationship network graph with the financial accounts in the financial transaction records that meet the predetermined statistical conditions as nodes and with the established financial transaction relationships as edges;
clustering the financial accounts in the financial relationship network by adopting a clustering algorithm;
establishing a cluster sub-graph of each cluster, with the financial accounts belonging to the cluster as nodes and with the financial transaction relationships between the financial accounts belonging to the cluster as edges; and
generating a characteristic vector of each cluster sub-graph, as the cluster characteristics of each cluster, by adopting a characteristics extraction algorithm.

4. The method according to Claim 3, wherein the characteristics extraction algorithm comprises: a network motifs method;
the clustering algorithm comprises: a label propagation algorithm (LPA), or a K-means algorithm.

5. The method according to Claim 1, wherein establishing, based on financial transaction records that meet the predetermined statistical conditions, financial transaction relationships between financial accounts in the records comprises: establishing a financial transaction relationship between two financial accounts in each record in the financial transaction records that meet a predetermined statistical condition; accumulating a total amount of financial transaction between any two financial accounts with financial transition records, and when the total amount of financial transactions between certain two financial accounts is lower than a predetermined threshold, deleting the financial transaction relationship between the two financial accounts.

6. The method according to Claim 1, wherein the financial transaction relationships comprise: a one-way financial relationship and a two-way financial relationship between the two financial accounts.

7. The method according to Claim 6, wherein establishing, based on financial transaction records that meet the predetermined statistical conditions, financial transaction relationships between financial accounts in the records comprises: respectively accumulating the one-way total transaction amounts of the two transaction directions between any two financial accounts having a financial transaction relationship, and when the one-way total transaction amounts of the two transaction directions between two financial accounts meet a predetermined difference condition, the financial transaction relationship is considered to be a one-way financial relationship between the two financial accounts; otherwise, the financial transaction relationship is considered to be a two-way financial relationship between the two financial accounts.

8. The method according to Claim 1, wherein the predetermined statistical conditions comprise: fund transfer, depositing and cash withdrawal between the financial accounts over a predetermined time period.

9. A device for identification of suspicious money-laundering groups, comprising:
a financial transaction relationship unit, for establishing, based on financial transaction records that meet predetermined statistical conditions, financial transaction relationships between financial accounts in the records;
a cluster characteristics generating unit, for clustering the financial accounts by adopting a clustering algorithm according to the established financial transaction relationships, and generating cluster characteristics for each cluster;
a binary classification model training unit, for labeling clusters that meet a blacklist condition as money-laundering clusters, labeling clusters that meet a whitelist condition as normal clusters, and using the cluster characteristics of the money-laundering clusters and the normal clusters as sample data to train a binary classification model;
a suspicious group determining unit, for inputting cluster characteristics of clusters other than the money-laundering clusters and the normal clusters into the trained binary classification model, and determining whether the other clusters are suspicious money-laundering groups according to an output of the binary classification model.

10. The device according to Claim 9, further comprising an abnormal cluster discovery unit, for searching for abnormal clusters in all clusters by adopting an abnormality detection algorithm, to carry out discovery of risky network characteristics.

11. The device according to Claim 9, wherein the cluster characteristics generating unit is specifically used for: establishing a financial relationship network graph, with the financial accounts in the financial transaction records that meet a predetermined statistical condition as nodes and with the established financial transaction relationships as edges; clustering the financial accounts in the financial relationship network by adopting a clustering algorithm; establishing a cluster sub-graph of each cluster, with the financial accounts belonging to the cluster as nodes and with the financial transaction relationship between the financial accounts belonging to the cluster as edges; and generating a characteristic vector of each cluster sub-graph, as the cluster characteristics of each cluster, by adopting a characteristics extraction algorithm.

12. The device according to Claim 11, wherein the characteristics extraction algorithm comprises: a network motifs method; and
the clustering algorithm comprises: a label propagation algorithm (LPA), or a K-means algorithm.

13. The device according to Claim 9, wherein the financial transaction relationship unit is specifically used for: establishing a financial transaction relationship between two financial accounts in each record in the financial transaction records that meet a predetermined statistical condition; accumulating a total amount of financial transactions between any two financial accounts with financial transition records, and when the total amount of financial transaction records between certain two financial accounts is lower than a predetermined threshold, deleting the financial transaction relationship between the two financial accounts.

14. The device according to Claim 9, wherein the financial transaction relationships comprise: a one-way financial relationship and a two-way financial relationship between the two financial accounts.

15. The device according to Claim 14, wherein the financial transaction relationship unit is further used for: respectively accumulating one-way total transaction amounts of two transaction directions between any two financial accounts having a financial transaction relationship, and when the one-way total transaction amounts of the two transaction directions between two financial accounts meet a predetermined difference condition, the financial transaction relationship is considered to be a one-way financial relationship between the two financial accounts; otherwise, the financial transaction relationship is considered to be a two-way financial relationship between the two financial accounts.

16. The device according to Claim 9, wherein the predetermined statistical conditions comprise: fund transfer, depositing and cash withdrawal between the financial accounts over a predetermined time period.

17. A computer apparatus, comprising: a memory and a processor; the memory having a computer program stored thereon which may be executed by the processor and when the processor executes the computer program, the steps of any one of Claims 1 to 8 are executed.

18. A computer-readable storage medium having computer programs stored thereon and when the computer programs are executed by a processor, the steps of any one of Claims 1 to 8 are executed.
